# EUROPÄISCHE PATENTANMELDUNG

(11) **EP 2 159 658 A1**
(43) Veröffentlichungstag der Anmeldung: **03.03.2010**
(21) Anmeldenummer: 08015238.2
(22) Anmeldetag: 28.08.2008
(51) Int. Cl.: G05B 23/02

(54) **Verfahren und Automatisierungs-Controller zur Ausgabe einer Wartungsinformation einer Automatisierungskomponente**

(71) Anmelder: Siemens Aktiengesellschaft, 80333 München (DE)
(72) Erfinder: Dausend, Stefan, 91126 Schwabach (DE); Helmig, Dieter, 90475 Nürnberg (DE); Plattner, Christoph, 90431 Nürnberg (DE); Schindler, Josef, 90489 Nürnberg (DE)

(57) **Zusammenfassung**

Die Erfindung betrifft ein Verfahren zur Ausgabe einer Wartungsinformation einer Automatisierungskomponente (AK1, ..., AK6) in einer Automatisierungsanordnung, wobei die Automatisierungsanordnung zumindest die Automatisierungskomponente (AK1, ..., AK6), einen Automatisierungs-Controller (CPU) und ein lokales, der Automatisierungskomponente (AK1, ..., AK6) funktional zugeordnetes Bediengerät (HMI1, HMI2) umfasst. Dabei wird in einem ersten Schritt in den Automatisierungs-Controller (CPU) eine Statusinformation betreffend die Automatisierungskomponente (AK1, ..., AK6) gebildet, in einem zweiten Schritt die Statusinformation von dem Automatisierungs-Controller (CPU) zur Generierung oder Änderung der Wartungsinformation verwendet, und in einem dritten Schritt die Wartungsinformation von dem Automatisierungs-Controller (CPU) zu dem Bediengerät (HMI1, HMI2) übertragen und dort ausgegeben.

## Beschreibung

Die Erfindung betrifft ein Verfahren zur Ausgabe einer Wartungsinformation einer Automatisierungskomponente gemäß dem Oberbegriff des Patentanspruchs 1, und einen Automatisierungs-Controller zur Ausgabe einer Wartungsinformation gemäß dem Oberbegriff des Patentanspruchs 11.

Automatisierungssysteme für automatisierte Produktionseinrichtungen und andere Anwendungen weisen eine Vielzahl von Sensoren und Aktoren auf, wobei diese zusammengefasst häufig mit dem Begriff "Automatisierungskomponenten" bezeichnet werden. Die Automatisierungskomponenten sind mit einer oder mehreren zentralen Einrichtungen verbunden, die oft als "Automatisierungs-Controller" oder auch kurz als "CPU" bezeichnet werden. Die Verbindung geschieht dabei üblicher Weise über ein sog. Bussystem, also über eine Datenleitung, an der eine Vielzahl von Automatisierungskomponenten und Automatisierungs-Controllern angeschlossen sein können. Ein Automatisierungs-Controller hat dabei üblicher Weise die Aufgabe, die Automatisierungskomponenten zu steuern. Das bedeutet, dass ein Automatisierungs-Controller von den Sensoren Messwerte und Zustandsinformationen empfängt und diese verarbeitet, und im Gegenzug Befehle (Steuerungsinformationen) für die Aktoren generiert und zu diesen überträgt. Weiterhin kann ein Automatisierungs-Controller von den Automatisierungskomponenten auch Statusinformationen empfangen und verarbeiten, wobei diese Statusinformationen Auskunft über den Zustand der jeweiligen Automatisierungskomponente selbst geben, beispielsweise über Störungen, Betriebszustand etc..

Weitere Bestandteile gebräuchlicher Automatisierungssysteme sind Bediengeräte, oft auch als "HMI" (Human-Machine-Interface) bezeichnet. Die Bediengeräte werden üblicher Weise auch an dem genannten Datenbus betrieben, wobei sie sowohl der Bedienung der Automatisierungs-Controller, als auch der Bedienung der Automatisierungskomponenten dienen. Häufig sind jedoch die Automatisierungskomponenten nicht direkt bedienbar, so dass in solchen Fällen (und bei manchen Anordnungen grundsätzlich) der Datenaustausch zwischen dem Bediengerät und demjenigen Automatisierungs-Controller stattfindet, welchem die betreffende Automatisierungskomponente zugeordnet ist. In komplexen, weitverzweigten Automatisierungssystemen wird in der Regel eine Mehrzahl von Bediengeräten und oft auch eine Mehrzahl von Automatisierungs-Controllern eingesetzt, wobei die Zuordnung von Automatisierungskomponenten zu Bediengeräten meist so erfolgt, dass ein Benutzer eines Bediengerätes Sichtkontakt zu einer zu bedienenden Automatisierungskomponente hat; dies gilt vor allem für Aktoren, mit denen Maschinen oder Werkstücke bewegt werden können, und auch für andere "sicherheitsrelevante" Einsatzbereiche.

Im Fall einer Störung können auf den Anzeigeeinrichtungen von Bediengeräten auch Statusinformationen der betreffenden (gestörten) Automatisierungskomponenten dargestellt werden. Diese werden idealer Weise direkt von der betreffenden Automatisierungskomponente abgerufen, oft jedoch auch aus einem Systemspeicher des Automatisierungs-Controllers abgerufen. Somit ist es oft leicht möglich, die gestörte Automatisierungskomponente zu identifizieren, weil sich das zugeordnete Bediengerät, wie gesagt, häufig in unmittelbarer Nähe der jeweiligen Automatisierungskomponente befindet.

Während eine in einer Automatisierungskomponente selbst oder in einem zugeordneten Automatisierungs-Controller vorliegende Statusinformation oft nur "binär" aussagt, ob diese Automatisierungskomponente betriebsbereit ist, oder aber nicht, ist es häufig beabsichtigt, durch geeignete Wartungsmaßnahmen den "Störungsfall" erst gar nicht eingetreten zu lassen. Man versucht also, aus Statusinformationen und aus Erfahrungswerten, beispielsweise einem MTBF-Wert (MTBF = Mean Time Between Failure) solche Automatisierungskomponenten zu identifizieren, die zwar zur Zeit (noch) zufriedenstellend funktionieren, aber zeitnah gewartet werden müssen, um einen störungsfreien Weiterbetrieb des Automatisierungssystems zu gewährleisten. Zu diesem Zweck ist es üblich, Betriebs- und Statusinformationen, die die Automatisierungskomponenten betreffen, regelmäßig an eine zentrale Wartungs-Komponente zu übermitteln, die auch "Diagnose-Station" oder "Maintenance-Station" genannt wird. Oft sind solche "Maintenance-Stations" Produkte von anderen Herstellern als dem Hersteller des eigentlichen Automatisierungssystems und werden dann auch als "MES-System" (MES = Manufacturer Execution System) bezeichnet. Dabei handelt es sich meist um einen zentralen Arbeitsplatz-Rechner, bei dem die Betriebs- und Statusinformationen vieler oder aller Automatisierungskomponenten zentral erfasst und mit anderen Daten (beispielsweise den bereits genannten MTBF-Werten) jeweils im Bezug gesetzt werden. Daraus werden durch die "Maintenance-Station" Wartungsanweisungen generiert und ausgegeben, wobei diese meist von einem Service-Mitarbeiter ausgelesen und notiert oder ausgedruckt und dann "abgearbeitet" werden.

An dem genannten Verfahren zur Erstellung und Verarbeitung von Wartungsinformationen hat sich als nachteilig erwiesen, dass der Service-Mitarbeiter die zentral vorliegenden Informationen (Wartungsanweisungen, technische Daten) aufschreiben bzw. ausdrucken und mit sich führen muss, jedoch "vor Ort" bei der zu wartenden Automatisierungskomponente keinen Zugriff auf den vollen Datenbestand der "Maintenance-Station" hat. Dies ist insbesondere bei komplexen Automatisierungssystemen von Nachteil, weil die Anordnung der einzelnen Automatisierungskomponenten häufig unübersichtlich ist, so dass es bereits schwierig ist, eine betroffene Automatisierungskomponente überhaupt zu lokalisieren (aufzufinden). Ein weiterer Nachteil besteht darin, dass die in der "Maintenance-Station" vorliegenden "Informationen" häufig zu komplex sind, um sie umfassend aufzuschreiben bzw. auszudrucken.

Zur Überwindung der genannten Nachteile sind bereits verschiedene Ansätze bekannt, beispielsweise die Ausführung der "Maintenance-Station" als mobiles Gerät (beispielsweise als Laptop-Computer oder PDA etc.). Dies hat jedoch - unter anderem - den Nachteil, dass der Service-Mitarbeiter ein solches ggf. empfindliches und schweres Gerät mit sich tragen muss, was insbesondere in einer "rauen" Industrie-Umgebung auch weitere technische Probleme nach sich ziehen kann. Ein anderer Weg zur Vermeidung der Nachteile besteht darin, in einer verzweigten Automatisierungsanordnung eine Vielzahl von "Maintenance-Stations" zu betreiben, in der Hoffnung, dass sich im Umfeld einer zu wartenden Automatisierungskomponente eine dieser "Maintenance-Stations" befindet. Diese Lösung bringt naturgemäß einen erhöhten Aufwand für Hardware und Software mit sich.

Es ist also eine Aufgabe der vorliegenden Erfindung, das Auffinden von zu wartenden Automatisierungskomponenten zur erleichtern und im lokalen Umfeld der Automatisierungskomponenten die erforderlichen Wartungsinformationen zugänglich zu machen.

Die Aufgabe wird durch das erfindungsgemäße Verfahren gemäß Patentanspruch 1 und durch den erfindungsgemäßen Automatisierungs-Controller gemäß dem Patentanspruch 11 gelöst.

Die Lösung der Aufgabe sieht dabei ein Verfahren zur Ausgabe einer Wartungsinformation einer Automatisierungskomponente in einer Automatisierungsanordnung vor, wobei die Automatisierungsanordnung zumindest die Automatisierungskomponente, ein Automatisierungs-Controller und ein lokales, der Automatisierungskomponente funktional zugeordnetes Bediengerät umfassen. Dabei wird zunächst durch den Automatisierungs-Controller eine Statusinformation betreffend die Automatisierungskomponente gebildet oder durch diesen erfasst. Danach wird die Statusinformation von dem Automatisierungs-Controller zur Generierung oder Änderung der Wartungsinformation verwendet, wonach die Wartungsinformation von dem Automatisierungs-Controller zu dem Bediengerät übertragen und dort ausgegeben (angezeigt) wird. Durch dieses Verfahren ist es möglich, die ohnehin bereits lokal (meist im Sichtbereich) der Automatisierungskomponenten vorliegenden Bediengeräte zum Zugriff auf die Wartungsinformationen zu nutzen, wodurch eine Service-Mitarbeiter eine zu wartende Automatisierungskomponente leicht identifizieren, auffinden und bedienen kann. Außerdem können so an den Bediengeräten automatisch Hinweise auf zu wartende Automatisierungskomponenten ausgegeben werden, so dass das Auffinden solcher Automatisierungskomponenten erleichtert wird.

Die Aufgabe wird weiter durch einen Automatisierungs-Controller zur Ausgabe einer Wartungsinformation einer Automatisierungskomponente in einer Automatisierungsanordnung mit zumindest einem Bediengerät gelöst, wobei der Automatisierungs-Controller zur Erfassung zumindest einer Statusinformation der zumindest einen Automatisierungskomponente eingerichtet ist, und wobei der Automatisierungs-Controller der Generierung oder der Änderung von einer Wartungsinformation betreffend die zumindest eine Automatisierungskomponente dient, wobei der Automatisierungs-Controller weiterhin zur Übermittlung der Wartungsinformation zu dem zumindest einen Bediengerät eingerichtet ist. Durch den Einsatz eines solchen Automatisierungs-Controllers kann ein Bediengerät mit den für einen Wartungseinsatz erforderlichen Informationen versorgt werden. Notwendige Bedieneingaben des Service-Mitarbeiters an dem Bediengerät vor Ort mit Sichtkontakt zur Maschine sind unmittelbar möglich.

Vorteilhafte Ausgestaltungen des erfindungsgemäßen Verfahrens sind in den abhängigen Patentansprüchen 2 bis 10 angegeben; eine vorteilhafte Ausgestaltung des erfindungsgemäßen Automatisierungs-Controllers ist in dem abhängigen Patentanspruch 12 angegeben. Die in den abhängigen Patentansprüchen zu dem Verfahren angegebenen Merkmale und Vorteile sind sinngemäß auch auf den erfindungsgemäßen Automatisierungs-Controller anzuwenden, und umgekehrt.

Die Software (Firmware) der Bediengeräte muss auf die Verarbeitung (Anzeige, Ausgabe) der Wartungsinformationen eingerichtet werden. Dies wird erleichtert, wenn bei einer Automatisierungsanordnung, die aus einer Mehrzahl von Automatisierungskomponenten mit einer Mehrzahl von Wartungsinformationen besteht, möglichst alle Wartungsinformationen der Automatisierungskomponenten in einem einheitlichen Datenformat gespeichert bzw. verarbeitet und derart aufbereitet an das Bediengerät oder die Bediengeräte übertragen werden.

Da Bediengeräte oft nur eingeschränkte Benutzeroberflächen und weitere Ausstattungsmerkmale aufweisen, kann es häufig von Vorteil sein, wenn die Wartungsinformation bzw. Wartungsinformationen von dem Automatisierungs-Controller bzw. den Automatisierungs-Controllern an eine (oder mehrere) Diagnose-Station(en) übertragen wird (werden). Damit bleibt der Vorteil eines zentralen Arbeitsplatzes zum Zugriff auf Wartungsinformationen erhalten, wobei jedoch weiterhin der Vorteil der dezentralen Verfügbarkeit der Wartungsinformationen fortbesteht. Im Fall des Einsatzes zumindest einer "zentralen" Diagnose-Station ("Maintenance-Station", "MES-System") können von einer solchen Diagnose-Station zu dem Automatisierungs-Controller zusätzliche Wartungsinformationen betreffend die Automatisierungskomponente übertragen werden, wobei von dem Automatisierungs-Controller diese zusätzlichen Wartungsinformationen bei der Generierung oder Änderung der an das Bediengerät zu übertragenden Wartungsinformation berücksichtigt werden. Dies betrifft zum Beispiel auch Vergleichswerte im Sinne von MTBF-Werten oder sog. "Schwellwerte", deren Erreichen bzw. Überschreiten ein Wartungsereignis auslösen können.

Viele Automatisierungskomponenten sind technisch vergleichsweise einfach aufgebaut, so dass sie oft nur eingeschränkte "kryptische" Statusinformationen zu dem Automatisierungs-Controller übertragne können. Daher ist es hilfreich, in dem Automatisierungs-Controller einen Datensatz mit einer elektronischen Gerätebeschreibung der jeweiligen Automatisierungskomponente vorzuhalten, wobei Statusinformationen und andere Informationen über die betreffende Automatisierungskomponente gemäß dieser Gerätebeschreibung aufgearbeitet (übersetzt) und dadurch in einem einheitlichen Datenformat gespeichert werden können. Dabei sind Gerätebeschreibungen in bekannten Datenformaten, wie dem GSDML oder dem EDD-Format, besonders vorteilhaft auch herstellerübergreifend einsetzbar.

Vorteilhaft wird ein Automatisierungs-Controller mit einer Datenschnittstelle zu einem MES-System (MES = Manufacturer Execution System) ausgestattet, wobei durch den Automatisierungs-Controller die Status- und die Wartungsinformation in ein für das betreffende MES-System spezifisches Datenformat umgesetzt und zu diesem MES-System übermittelt werden. Die in den gebräuchlichen MES-Systemen vorgehaltenen Algorithmen zur Generierung und Änderung von Wartungsinformationen können so mit Daten versorgt werden. Besonders vorteilhaft ist dann ein daran anschließender umgekehrter Datentransfer, wobei die mittels eines MES-Systems generierten Wartungsinformation(en) an den Automatisierungs-Controller versendet, dort gespeichert und schließlich den Bediengeräten zugänglich gemacht werden können.

In vielen Anwendungsszenarien ist an ein- und demselben Automatisierungs-Controller nicht nur eine Vielzahl von Automatisierungskomponenten angeschlossen bzw. logisch "angemeldet", sondern auch eine Mehrzahl an Bediengeräten. In diesem Fall ist es hilfreich, wenn in dem Automatisierungs-Controller eine möglichst eindeutige Zuordnung von Automatisierungskomponenten zu Bediengeräten vorliegt, so dass im Idealfall die Wartungsinformation einer Automatisierungskomponente zu dem dieser Automatisierungskomponente nächstliegenden Bediengerät übermittelt wird bzw. diesem zugänglich gemacht wird.

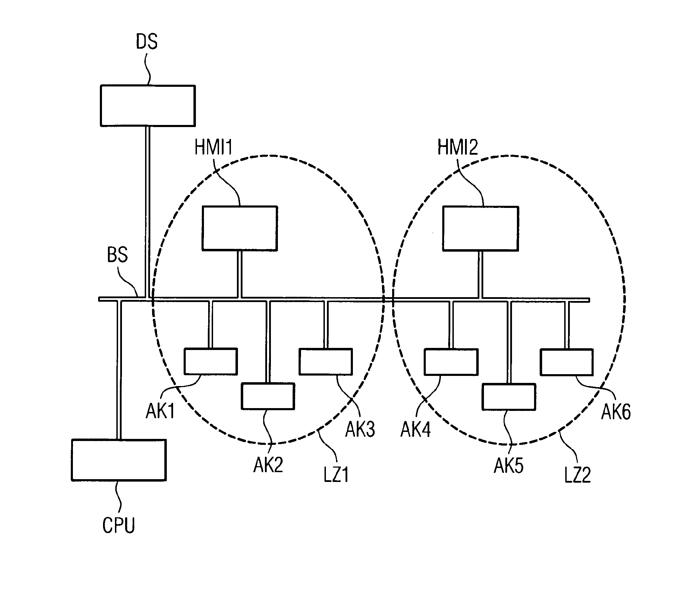

Ausführungsbeispiele eines erfindungsgemäßen Verfahrens werden nachfolgend anhand der Figur erläutert. Sie dienen gleichzeitig der Erläuterung eines Ausführungsbeispiels für einen erfindungsgemäßen Automatisierungs-Controller.

Dabei zeigt die einzige Figur eine Anordnung aus einem Automatisierungs-Controller, mehreren Automatisierungskomponenten, mehreren Bediengeräten und einer Diagnose-Station.

In der Figur ist schematisch und auszugsweise eine Automatisierungsanordnung mit einem Datenbus BS ("Bus-System") dargestellt, an dem in zwei lokalen Zonen LZ1, LZ2 gruppiert die Automatisierungskomponenten AK1, ..., AK6, die Bediengeräte HMI1, HMI2 ("Human Machine Interface"), der Automatisierungs-Controller CPU (Central Processing Unit) und die Diagnose-Station DS angeschlossen sind. Sämtliche weitere, für die Funktion eines Automatisierungssystems bzw. einer Automatisierungsanordnung wichtigen Geräte, Komponenten und Einrichtungen, die nicht bei der Beschreibung des vorliegenden Ausführungsbeispiels direkt angesprochen werden, sind aus Gründen der Übersichtlichkeit in der Figur nicht dargestellt.

Im Folgenden soll anhand der Figur die Generierung und Ausgabe einer Wartungsinformation für die Automatisierungskomponente AK1 beschrieben werden; als Automatisierungskomponente AK1 wird hier exemplarisch ein Temperatursensor für eine Produktionsanlage betrachtet. Dieser Temperatursensor ist hierbei aus Redundanzgründen intern zweikanalig ausgeführt, wobei bei einem Ausfall des ersten Kanals (Hauptkanal) automatisch auf den zweiten Kanal (Hilfs-Kanal) umgeschaltet wird und zusätzlich eine entsprechende Statusinformation erzeugt wird, die über den Datenbus BS auslesbar ist. Diese Statusinformation besteht aus dem Setzen eines dafür reservierten Bits in den Temperaturmesswerten, die von dem Automatisierungs-Controller CPU in regelmäßigen Zeitabständen aus der Automatisierungskomponente AK1 (Temperatursensor) ausgelesen werden. Über den Temperatursensor (Temperaturfühler) ist weiterhin bekannt, dass dieser einem temperaturabhängigen Verschleiß unterliegt, wobei von dem Hersteller des Temperatursensors ein Austausch nach einer Betriebsdauer von 10.000 Stunden bei Temperaturen oberhalb von 500°C empfohlen wird; dieser Wert wird als MTBF- oder Schwellwert im Folgenden zur Entscheidung über die Ausgabe einer Wartungsinformation verwendet.

Durch die Gerätebeschreibung (Geräteinformation) in einer standardisierten Beschreibungs-Sprache (z.B. GSDML) liegen beim Engineering der Automatisierungskomponenten alle notwenigen Diagnoseinformationen vor. In der Geräteinformation sind dabei auch die vorstehend beschriebenen Informationen, beispielsweise als MTBF-Wert eine Betriebsgrenze von 10.000 Stunden bei Temperaturen höher als 500°C, codiert, und außerdem eine Anweisung darüber, dass in den Fällen, in denen der Temperatursensor auf den zweiten Kanal umgeschaltet ist, ebenfalls ein Austausch dieses Bauteils vorgeschlagen werden soll.

Bei dem laufenden Betrieb der Automatisierungskomponente AK1 werden also im vorliegenden Ausführungsbeispiel zwei verschiedene Statusinformationen in dem Automatisierungs-Controller CPU vorgehalten, nämlich zum Einen der Status über die Aktivierung des "Hilfskanals", welcher von der betroffenen Automatisierungskomponente AK1 selbst erzeugt wird und zum Anderen ein extern gebildeter Status, nämlich die Betriebsdauer der Automatisierungskomponente AK1 bei höheren Temperaturen. Diese letztgenannte Statusinformation wird durch den Automatisierungs-Controller CPU selbst erzeugt, indem in regelmäßigen Zeitabständen ein Temperaturmesswert von der Automatisierungskomponente AK1 ausgelesen wird, wobei immer dann, wenn der ausgelesene Temperaturmesswert 500°C erreicht oder überschreitet, ein diesen Temperaturfühler zugeordneter Betriebsstundenzähler um eine entsprechende Zeiteinheit inkrementiert wird. Dadurch wird ein statistischer Wert über den bisherigen Betrieb der Automatisierungskomponente AK1 gewonnen.

Sobald eine der beiden genannten Statusinformationen die jeweilige Bedingung zur Auslösung des Wartungsereignisses (hier: Austausch des Temperaturfühlers) erfüllt, erzeugt der Automatisierungs-Controller CPU eine dementsprechende Wartungsinformation, die vorliegend in einem Hinweis bzw. einer Hinweismeldung besteht, die den Austausch des Temperaturfühlers empfiehlt und den dafür vorliegenden Grund (Defekt des Hauptkanals des Temperaturfühlers oder Überschreitung der Betriebsgrenze) angibt. Diese Meldung wird zu demjenigen Bediengerät HMI1 übertragen, welches dem Automatisierungs-Controllers CPU der Automatisierungskomponente AK1 entsprechend zugeordnet ist. Zusätzlich wird die Wartungsinformation (Meldung) durch den Automatisierungs-Controller CPU zu der Diagnose-Station DS übermittelt und auch dort angezeigt. Alternativ zu der festen Zuordnung eines oder mehrerer Bediengeräte HMI1, HMI2 zu dem betroffenen Automatisierungs-Controller CPU können den Bediengeräten HMI1, HMI2 und den Automatisierungskomponenten AK1, ..., AK6 auch jeweils eine lokale Zone LZ1, LZ2 als Ortsinformation zugeordnet sein, so dass die Ausgabe der Wartungsinformation im vorliegenden Ausführungsbeispiel an das Bediengerät HMI1 mit derselben lokalen Zone LZ1 ausgegeben wird, die auch der betroffenen Automatisierungskomponente AK1 zugeordnet ist. Entsprechendes gilt beim Einsatz mehrerer Diagnose-Stationen DS.

Während in dem vorstehenden Ausführungsbeispiel zwei Statusinformationen ausgewertet wurden, wobei eine dieser Statusinformationen durch die Automatisierungskomponente AK1 selbst gebildet wurde und die zweite Statusinformation durch den Automatisierungs-Controller CPU anhand von statistischen Daten über den bisherigen Betrieb der Automatisierungskomponente AK1, nämlich Betriebsdauer und Betriebstemperatur, errechnet wurden, sind alternativ auch andere "Datenquellen" für Statusinformationen denkbar, beispielsweise "dritte" Komponenten in Form von Verschleißsensoren o.ä.. Weiterhin ist auch ein Datenaustausch zwischen dem Automatisierungs-Controller CPU und der Diagnose-Station DS oder einem anderen MES-System denkbar, wobei über diesen Weg auch Wartungsanweisungen in Form von Arbeitplänen, Materiallisten, Checklisten, Schaltpläne, Flussdiagramme, Ersatzteilinformationen etc. auf dem Bediengerät HMI1 verfügbar gemacht werden können.

In vorteilhaften Ausgestaltungen ist es meist der Fall, dass die Statusinformationen im sog. "Push-Verfahren" von den Automatisierungskomponenten AK1, ..., AK6 zu dem Automatisierungs-Controller CPU übertragen werden, wobei weiterhin zumeist das "Push-Verfahren" auch für die Übermittlung der Wartungsinformation von dem Automatisierungs-Controller CPU zu den Bediengeräten HMI1, HM2 verwendet wird. Selbstverständlich können jedoch auch alle diese Informationen wahlweise von den empfangenden Komponenten im "Pull-Verfahren" abgerufen werden. Schließlich sind bei den genannten Datenquellen für Statusinformationen und Vergleichswerten (MTBF-Werte, Schwellwerte, etc.) auch kombinierte Methoden und Quellen einsetzbar, um zu optimierten Wartungsinformationen zu gelangen. Gerade beim "vorsorglichen" Austausch oder der präventiven Wartung hat sich herausgestellt, dass die durchschnittliche oder wahrscheinliche Lebensdauer von Komponenten von einer Vielzahl von Faktoren wie z.B. Temperaturen, Schaltvorgängen, Spannungen, mechanischen Belastungen etc. abhängt. Daher ist es vorteilhaft, möglichst viele der genannten und andere Größen zur Generierung von Wartungsinformationen heranzuziehen.

## Patentansprüche

1. Verfahren zur Ausgabe einer Wartungsinformation einer Automatisierungskomponente (AK1, ..., AK6) in einer Automatisierungsanordnung,
wobei die Automatisierungsanordnung zumindest die Automatisierungskomponente (AK1, ..., AK6), einen Automatisierungs-Controller (CPU) und ein lokales, der Automatisierungskomponente (AK1, ..., AK6) funktional zugeordnetes Bediengerät (HMI1, HMI2) umfasst,
**dadurch gekennzeichnet, dass**
- in einem ersten Schritt in den Automatisierungs-Controller (CPU) eine Statusinformation betreffend die Automatisierungskomponente (AK1, ..., AK6) gebildet wird,
- in einem zweiten Schritt die Statusinformation von dem Automatisierungs-Controller (CPU) zur Generierung oder Änderung der Wartungsinformation verwendet wird, und
- in einem dritten Schritt die Wartungsinformation von dem Automatisierungs-Controller (CPU) zu dem Bediengerät (HMI1, HMI2) übertragen und dort ausgegeben wird.

2. Verfahren nach Patentanspruch 1,
**dadurch gekennzeichnet, dass**
für die Automatisierungsanordnung eine Mehrzahl von Automatisierungskomponenten (AK1, ..., AK6) mit einer Mehrzahl Wartungsinformationen verwendet wird, wobei
die Wartungsinformationen der Automatisierungskomponenten (AK1, ..., AK6) in einem einheitlichen Datenformat verarbeitet werden.

3. Verfahren nach einem der vorhergehenden Patentansprüche,
**dadurch gekennzeichnet, dass**
die Statusinformation in dem ersten Schritt von der Automatisierungskomponente (AK1, ..., AK6) erzeugt und zu dem Automatisierungs-Controller (CPU) übermittelt wird.

4. Verfahren nach einem der vorhergehenden Patentansprüche,
**dadurch gekennzeichnet, dass**
die Statusinformation durch den Automatisierungs-Controller (CPU) selbst anhand statistischer Informationen über den bisherigen Einsatz der Automatisierungskomponente (AK1, ..., AK6) erzeugt wird.

5. Verfahren nach einem der vorhergehenden Patentansprüche,
**dadurch gekennzeichnet, dass**
die Statusinformation durch den Automatisierungs-Controller (CPU) anhand von Informationen gebildet wird, die von dritten Komponenten erfasst und zu dem Automatisierungs-Controller (CPU) übertragen werden.

6. Verfahren nach einem der vorhergehenden Patentansprüche,
**dadurch gekennzeichnet, dass**
die Wartungsinformation von dem Automatisierungs-Controller (CPU) an eine Diagnose-Station (DS) übertragen wird.

7. Verfahren nach Patentanspruch 6,
**dadurch gekennzeichnet, dass**
von der Diagnose-Station (DS) zu dem Automatisierungs-Controller (CPU) zusätzliche Wartungsinformationen betreffend die Automatisierungs-Komponente übertragen werden, wobei
von dem Automatisierungs-Controller (CPU) diese zusätzlichen Wartungsinformationen bei der Generierung oder Änderung der an das Bediengerät (HMI1, HMI2) zu übertragenden Wartungsinformation berücksichtigt werden.

8. Verfahren nach einem der vorhergehenden Patentansprüche,
**dadurch gekennzeichnet, dass**
in dem Automatisierungs-Controller (CPU) eine GeräteBeschreibung der Automatisierungs-Komponente gespeichert wird, wobei die zu übertragende Wartungsinformation vor der Übertragung durch den Automatisierungs-Controller (CPU) in ein durch die Gerätebeschreibung definiertes Datenformat umgesetzt werden.

9. Verfahren nach Patentanspruch 8,
**dadurch gekennzeichnet, dass**
für die Gerätebeschreibung das GSDML- oder das EDD-Datenformat verwendet wird.

10. Verfahren nach einem der vorhergehenden Patentansprüche,
**dadurch gekennzeichnet, dass**
der Automatisierungs-Controller (CPU) mit einer Datenschnittstelle zu einem MES-System ausgestattet ist, wobei
durch den Automatisierungs-Controller (CPU) die Wartungsinformation in ein für das MES-System spezifisches Datenformat umgesetzt und zu diesem MES-System übermittelt werden.

11. Automatisierungs-Controller (CPU) zum Einsatz in einer Automatisierungsanordnung mit zumindest einer Automatisierungskomponente (AK1, ..., AK6) und zumindest einem Bediengerät (HMI1, HMI2),
**dadurch gekennzeichnet, dass**
der Automatisierungs-Controller (CPU) zur Erfassung zumindest einer Statusinformation der zumindest einen Automatisierungskomponente (AK1, ..., AK6) eingerichtet ist,
der Automatisierungs-Controller (CPU) zur Generierung oder zur Änderung von Wartungsinformation betreffend die zumindest eine Automatisierungskomponente (AK1, ..., AK6) eingerichtet ist, und
dass der Automatisierungs-Controller (CPU) zur Übermittlung der Wartungsinformation zu dem zumindest einen Bediengerät (HMI1, HMI2) eingerichtet ist.

12. Automatisierungs-Controller (CPU) gemäß Patentanspruch 11,
wobei der Automatisierungs-Controller (CPU) in einer Automatisierungsanordnung mit einer Mehrzahl an Automatisierungskomponenten (AK1, ..., AK6) und einer Mehrzahl an Bediengeräten (HMI1, HMI2) angeordnet ist,
wobei jedem der Bediengeräte (HMI1, HMI2) eine Untermenge der Automatisierungskomponenten (AK1, ..., AK6) zugeordnet ist,
**dadurch gekennzeichnet, dass**
in dem Automatisierungs-Controller (CPU) Zuordnungsinformationen über die Zuordnung der Automatisierungskomponenten (AK1, ..., AK6) zu den Bediengeräten (HMI1, HMI2) gespeichert sind,
wobei
der Automatisierungs-Controller (CPU) derart eingerichtet ist, dass die den jeweiligen Automatisierungskomponenten (AK1, ..., AK6) zugeordneten Wartungsinformationen jeweils nur an das der betreffenden Automatisierungskomponente (AK1, ..., AK6) zugeordnete Bediengerät (HMI1, HMI2) übermittelt wird.
